# EUROPÄISCHE PATENTSCHRIFT

(11) **EP 0 994 918 B1**
(45) Veröffentlichungstag und Bekanntmachung des Hinweises auf die Patenterteilung: **09.10.2002**
(21) Anmeldenummer: 98940088.2
(22) Anmeldetag: 26.06.1998
(51) Int. Cl.: C08L 3/10, C08L 3/02, C08L 3/12, C08L 3/04

(54) **DIALDEHYDSTÄRKE UND NATÜRLICHE POLYMERE ENTHALTENDE THERMOPLASTISCHE MISCHUNGEN**
THERMOPLASTIC MIXTURES CONTAINING DIALDEHYDE STARCH AND NATURAL POLYMERS
MELANGES THERMOPLASTIQUES CONTENANT DE L'AMIDON DIALDEHYDIQUE ET DES POLYMERES NATURELS

(30) Priorität: 09.07.1997 DE 19729269
(43) Veröffentlichungstag der Anmeldung: 26.04.2000
(73) Patentinhaber: Celanese Ventures GmbH, 65926 Frankfurt am Main (DE)
(72) Erfinder: BENGS, Holger, D-60598 Frankfurt am Main (DE); SCHNELLER, Arnold, D-64409 Messel (DE); BÖHM, Gitte, D-60439 Frankfurt am Main (DE); SCHUTH, Silke, D-56412 Ruppach-Goldhausen (DE); GRANDE, Jürgen, D-65812 Bad Soden (DE)
(74) Vertreter: Luderschmidt, Schüler & Partner
(86) Internationale Anmeldenummer: EP9803921
(87) Internationale Veröffentlichungsnummer: WO99002599

(56) Entgegenhaltungen:
- EP-A- 0 530 987
- EP-A- 0 599 535
- US-A- 5 397 834
- CHEMICAL ABSTRACTS, vol. 90, no. 26, 25. Juni 1979 Columbus, Ohio, US; abstract no. 207201, XP002083060 & JP 53 147237 A (FUJI DENKI KOGYO ET AL.) 21. Dezember 1978

## Beschreibung

Die Erfindung betrifft Mischungen, die thermoplastisch zu biologisch abbaubaren Formkörpern verarbeitet werden können und die als Komponenten Dialdehydstärke, Stärke oder modifizierte Stärke, ggf. noch weitere Polymere, insbesondere Biopolymere wie Proteine sowie Weichmacher und ggf. übliche Zusätze wie Antioxidantien, Entformungsmittel, Gleitmittel, Farbstoffe und dgl. enthalten. Die Erfindung betrifft ferner die Verwendung dieser Mischungen zur Herstellung von Formkörpern, welche insbesondere auf dem Gebiet der Lebensmittel und Pharmazeutika eingesetzt werden können.

Mit dem ständig wachsenden Umweltbewußtsein sowie den stets strenger werdenden Vorschriften hinsichtlich Abfallbeseitigung bzw. - verwertung haben die Anstrengungen, biologisch abbaubare Massen zur Herstellung von Formkörpem zu benutzen, stark zugenommen. Hinzu kommt, daß man sich mehr und mehr bemüht, dort, wo es möglich ist, anstelle von Materialien auf Erdölbasis Materialien, insbesondere Polymere auf Basis nachwachsender Rohstoffe einzusetzen. Ferner sind Stoffe auf natürlicher Basis vielfach physiologisch unbedenklicher.

Stärke sowie modifizierte Stärke, allein oder auch in Mischung mit anderen Polymeren, insbesondere Biopolymeren, gehören zu den nachwachsenden Rohstoffen, die stets mehr an Bedeutung gewinnen, vor allem auch für die Herstellung von Formkörpern wie z.B. Filmen und Folien. Dabei stellen sich für den Verarbeiter eine ganze Reihe von Problemen. Um durch Formgebung Stärke, modifizierte Stärke und auch Mischungen mit anderen Polymeren gut verarbeiten zu können, ist eine möglichst innige Vermischung, d.h. Homogenisierung der Komponenten erforderlich, insbesondere, wenn die Massen thermoplastisch verarbeitet werden sollen. Ferner kommt es darauf an, daß die Mischung bei der Verformung genügend weichgemacht ist, um nicht zu hohe Verformungstemperaturen zu benötigen und damit eine Zersetzung der Komponenten in Kauf zu nehmen. Ferner soll der Formkörper nicht nur gut biologisch abbaubar sein, sondern auch eine möglichst homogene innere Struktur und gute mechanische Eigenschaften wie Festigkeit und Elastizität besitzen. Insbesondere wird wieder für die meisten Anwendungen gefordert, daß die Sprödigkeit und der Abrieb möglichst gering sind. Auch soll der Weichmacher umweltverträglich sein, d.h. biologisch abbaubar und bevorzugt physiologisch unbedenklich sein.

Es sind bereits einige Publikationen zu Formmassen auf Basis von Stärken und Proteinen mit Dialdehydstärke als Zusatz bekannt.

In der DE-OS 1470882 z.B. wird ein Verfahren zur Herstellung von transparenten Folien zur Verpackung von Lebensmitteln beschrieben. Dabei werden 2-50% Protein und 5-70% eines Weichmachers in wäßriger Lösung bei 22-50°C mit 0,01-20 Gew.-% bezogen auf die trockenen Substanzen mit einem Dialdehydpolysaccarid z.B. Dialdehydstärke versetzt. Die Dialdehydstärke dient zur Vernetzung des Proteins; es reagieren freie Aminogruppen des Proteins mit den Aldehydgruppen. Dieses Verfahren ist umständlich und verbraucht sehr viel Energie, da bei der Herstellung der Filme etwa die zehnfache Menge Wasser bezogen auf Protein eingesetzt wird, die verdampft werden muß. Außerdem wird in zwei Stufen gehärtet.

In der US-PS-5,397,834 wird eine Zusammensetzung aus 10-35 Gew.-% Proteinen und 65-70 Gew.-% Aldehydstärke beschrieben. Zur Herstellung derartiger Zusammensetzungen werden 0,5-2 Teile Protein in etwa 2-6 Teilen eines solubilisierenden Lösungsmittels, z.B. einer 75%igen wäßrigen Äthylalkohollösung gelöst. Diese Lösung wird dann mit 2-8 Teilen einer Aldehydstärke vermischt. Die Aldehydstärke soll einen niedrigen Oxidationsgrad aufweisen, vorzugsweise 10-20%, um eine effektive Vernetzung des Proteins und der Aldehydstärke zu gewährleisten. Nach dem Vermischen wird das Lösungsmittel verdampft. Diese Vorgehensweise führt erneut zu vernetzten Materialien, die sich nicht zur thermoplastischen Weiterverarbeitung eignen.

Mischungen aus Stärke bzw. modifizierter Stärke und Proteinen, bei denen ebenfalls Vernetzungsmittel, u.a. Dialdehydstärke eingesetzt werden, sind in der WO 93/19125 beschrieben. Auch hier handelt es sich um Materialien, die nicht im Umfang der vorliegenden Erfindung liegen.

In der US-PS 4,220,264 wird die Herstellung von Formkörpern wie Filmen aus Amylose und Amylosestärke unter Mitverwendung von Vernetzungsmitteln und einer Flüssigkeit wie Dimethylsulfoxid beschrieben. Die Menge der benötigten Flüssigkeit beträgt das etwa 10- bis 20-fache der eingesetzten Stärke. Die gemäß den Beispielen 11 und 12 erhaltenen Filme, bei denen Dialdehydstärke als Vemetzungsmittel eingesetzt wird, sind allesamt brüchig.

In der EP-A1-0 599 535 schließlich wird ein Verfahren beschrieben, bei dem durch Extrusion Gemische geformt werden, die aus Stärke und einem Stärkeabbauprodukt wie einem Stärkehydrolyseprodukt mit DE-Werten (Dextrose-Äquivalent) von 1 bis 40, oxidierten Stärken und Pyrodextrinen bestehen. Die dabei verwendeten oxidierten Stärken weisen mit Jod die typische Stärkefarbreaktion auf. Dies ist ein deutlicher Hinweis darauf, daß die Hydroxymethylengruppe der Stärke oxidiert ist, oder der Oxidationsgrad einer Dialdehydstärke nur sehr gering ist.

Obwohl bereits eine ganze Reihe von Verfahren und Zusammensetzungen für die Herstellung von Formkörpern bekannt sind, bei denen Dialdehydstärke zum Einsatz gelangt, besteht noch ein Bedürfnis nach verbesserten Verfahren und verbesserten Zusammensetzungen, mit denen sich Formkörper herstellen lassen, die gute und verbesserte Eigenschaften aufweisen und die vielseitig verwendbar sind.

Aufgabe der Erfindung ist es deshalb, Zusammensetzungen zur Verfügung zu stellen, die Dialdehydstärke und mindestens eine weitere biologisch abbaubare Komponente auf Basis von Stärke oder modifizierter Stärke sowie Weichmachern ggf. weitere Biopolymere sowie sonstige übliche Zusätze enthalten, die einfach und wirtschaftlich herstellbar und thermoplastisch zu Formkörpern mit technisch nutzbaren Eigenschaften verarbeitbar sind, die nicht die Nachteile aufweisen, die bei der Vernetzung von Stärkekomponenten auftreten, die homogen sind und die zu Formkörpern mit homogener Struktur führen.

Diese Aufgabe wird gelöst durch eine thermoplastische Mischung gemäß Patentanspruch 1.

Weitere vorteilhafte Ausführungsformen werden in den Ansprüchen 2 bis 10 beschrieben. Ein weiterer Gegenstand der Erfindung ist ein Verfahren gemäß den Patentansprüchen 11 bis 13. Vorteilhafte Verwendungen werden in den Patentansprüchen 14 bis 18 angegeben.

Eine Gruppe von Stärken, die im Rahmen der Erfindung zum Einsatz gelangen können, umfaßt die aus pflanzlichen Rohstoffen gewonnenen Stärken. Hierzu zählen unter anderem Stärken aus Knollen, wie Kartoffeln, Maniok, Maranta, Batata, aus Samen wie Weizen, Mais, Roggen, Reis, Gerste, Hirse, Hafer, Sorghum, aus Früchten, wie Kastanien, Eicheln, Bohnen, Erbsen, u. a. Hülsenfrüchten, Bananen, sowie aus Pflanzenmark, z.B. der Sagopalme.

Die im Rahmen der Erfindung verwendbaren Stärken bestehen im wesentlichen aus Amylose und Amylopektin, in wechselnden Mengenverhältnissen.

Besonders gute Ergebnisse erzielt man unter anderem mit Stärken aus Kartoffeln (z.B. ®Toffena der Fa. Südstärke), Mais (z.B. Maize Starch der Fa. National Starch) oder auch mit Polyglucanen, die sich durch einen perfekt linearen Aufbau der Polymere auszeichnen.

Die Molekulargewichte der erfindungsgemäß nützlichen Stärken können über einen weiten Bereich variieren. Einsetzbar sind als Basis der erfindungsgemäßen thermoplastischen Mischung solche Stärken, die im wesentlichen aus einem Gemisch von Amylose und Amylopektin bestehen, mit Molekulargewichten M_{w} im Bereich zwischen 5x10⁴ und 1x10⁷. Bevorzugt werden längerkettige Polymere mit Molekulargewichten M_{w} zwischen 1x10⁶ und 5x10⁶.

Bevorzugt werden weiterhin auch lineare Stärken, vorzugsweise Polyglucane, insbesondere 1,4-a-D-Polyglucan, mit Molekulargewichten M_{w} im Bereich zwischen 5x10² und 1x10⁵, bevorzugt mit Molekulargewichten M_{w} zwischen 1x10³ und 5x10⁴.

Neben Formmassen auf Basis von Stärken nativen pflanzlichen Ursprungs gehören zur Erfindung auch solche thermoplastischen Mischungen oder Formmassen mit Stärken, die chemisch modifiziert sind, fermentativ gewonnen werden, rekombinanten Ursprungs sind oder durch Biotransformation (Biokatalyse) hergestellt wurden. Synonym für den Begriff "Biotransformation" verwendet man auch den Begriff "Biokatalyse".

Unter "chemisch modifizierten Stärken² versteht die Erfindung solche Stärken, bei denen auf chemischem Wege die Eigenschaften im Vergleich zu den natürlichen Eigenschaften verändert wurden. Dies wird im wesentlichen durch polymeranaloge Umsetzungen erreicht, bei denen Stärke mit mono-, bi- oder polyfunktionellen Reagenzien bzw. Oxidationsmitteln behandelt wird. Dabei werden vorzugsweise die Hydroxygruppen der Polyglucane der Stärke durch Veretherung, Veresterung oder selektive Oxidation umgewandelt oder die Modifizierung beruht auf einer radikalisch initiierten Propfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie z. B. nichtionische, anionische oder kationische Stärkeether, oxidierte Stärken, wie etwa Dialdehydstärke, Carboxystärke, Persulfat-abgebaute Stärken und ähnliche Substanzen.

"Fermentative Stärken" sind im Sprachgebrauch der Erfindung Stärken, die durch fermentative Prozesse unter Verwendung in der Natur vorkommender Organismen, wie Pilzen, Algen oder Bakterien gewonnen werden oder unter Einschaltung und Mithilfe von fermentativen Prozessen gewonnen werden können. Beispiele für Stärken aus fermentativen Prozessen umfassen neben anderen Amylose und Amylopektin.

Mit "Stärken rekombinanten Ursprungs" oder "rekombinante Stärken" meint die Erfindung im einzelnen Stärken, die durch fermentative Prozesse unter Verwendung in der Natur nicht vorkommender Organismen, aber unter Zuhilfenahme von gentechnischen Methoden modifizierten natürlichen Organismen, wie Pilzen, Algen oder Bakterien gewonnen werden oder unter Einschaltung und Mithilfe von fermentativen Prozessen gewonnen werden können. Beispiele für Stärken aus fermentativen, gentechnisch modifizierten Prozessen sind neben anderen Amylose, Amylopektin und Polyglucane.

"Durch Biotransformation hergestellte Stärken" bedeutet im Rahmen der Erfindung, daß Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen von Stärke abgeleitetes Polyglucan und modifizierte Polyglucane.

Schließlich lassen sich auch unter Verwendung von Derivaten der einzelnen genannten Stärken vorteilhafte thermoplastische Mischungen erhalten. Dabei bedeuten die Begriffe "Derivate von Stärken² oder "Stärkederivate² ganz allgemein modifizierte Stärken, d. h. solche Stärken, bei denen zur Veränderung ihrer Eigenschaften das natürliche Amylose/Amylopektin-Verhältnis verändert wurde, eine Vorverkleisterung durchgeführt wurde, die einem partiellen hydrolytischen Abbau unterzogen wurden oder die chemisch derivatisiert wurden.

Zu den destrukturieren Stärken, die im Rahmen der Erfindung eingesetzt werden können, gehören solche, die z.B. mittels Glyzerin so homogenisiert worden sind, daß in der Röntgendiffraktion keine kristallinen Reflexe mehr auftreten und im Polarisationsmikroskop Stärkekömer oder doppelbrechende Regionen bei tausendfacher Vergrößerung nicht mehr sichtbar sind. In diesem Zusammenhang wird auf die DE-A1-3931363 verwiesen, auf deren Offenbarung sich hier ausdrücklich bezogen wird.

Die erfindungsgemäß entsprechend der Lehre von Patentanspruch 3 eingesetzten Weichmacher sind größtenteils wie z.B. Gluconsäure oder Glucuronsäure, Galacturonsäure oder auch die Zuckersäuren, käufliche Produkte. Im übrigen können sie durch entsprechende Oxidation aus den zu den Kohlenhydraten gehörenden Zucker erhalten werden. In diesem Zusammenhang wird auf das Lehrbuch der Organischen Chemie von Beyer, Walter, S. Hitzel Verlag, Stuttgart, 1991, 22. Auflage, Seiten 431-432, Absatz 2 verwiesen. Auf diese Offenbarung wird ausdrücklich bezogen.

Zu den weiteren Polymeren, die mit eingesetzt werden können, zählen vor allem Proteine wie pflanzliche Proteine, z.B. Sonnenblumenprotein, Baumwollsamenprotein u.dgl., aber auch Plasmaprotein, Eiweiß u. dgl..

Im Rahmen der Erfindung können 1 oder mehrere Weichmacher eingesetzt werden. Der jeweils optimale Gehalt an Weichmacher richtet sich nach den übrigen Komponenten und kann auf einfache Weise für jede Formulierung separat bestimmt werden.

Grundsätzlich sind im Rahmen der Erfindung die Begriffe Weichmachungs-, Plastifikations-, Plastifizierungs,- oder Elastifizierungsmittel gleichbedeutend, mit Weichmacher.

Einsetzbar sind alle indifferenten, vorzugsweise organischen Substanzen mit im allgemeinen geringem Dampfdruck, welche ohne störende chemische Reaktion, vorzugsweise durch ihr Löse- und Quellvermögen, und, aber auch ohne ein solches, mit den Komponenten (A) und ggf. (B) oder (E) in Wechselwirkung treten und ein homogenes System mit diesen bilden.

Die erfindungsgemäß einzusetzende Komponente (D) verleiht der Mischung vorzugsweise eine erniedrigte Einfriertemperatur, erhöhtes Formveränderungsvermögen, erhöhte elastische Eigenschaften, verringerte Härte und ggf. gesteigertes Haftvermögen.

Bevorzugte Weichmacher gemäß der Erfindung sind geruchlos, farblos, licht-, kälteund wärmebeständig, nur wenig bis gar nicht hygroskopisch, wasserbeständig, nicht gesundheitsschädlich, schwer brennbar und möglichst wenig flüchtig, neutral reagierend, mit Polymeren und Hilfsstoffen mischbar und weisen ein gutes Gelierverhalten auf. Insbesondere sollen sie gegenüber den Komponenten A) und ggf. B) Verträglichkeit, Geliervermögen und weichmachende Wirksamkeit aufweisen.

Weiter sollen die erfindungsgemäß als Komponente D) einzusetzenden Verbindungen eine geringe Migration aufweisen, was insbesondere für Anwendungen der erfindungsgemäßen Formkörper im Lebensmittelbereich von Bedeutung ist.

Zu den besonders bevorzugten weichmachenden Komponenten D) gehören u.a. Dimethylsulfoxid, 1,3-Butandiol, Glyzerin, Ethylenglykol, Propylenglykol, Diglyzerid, Diglycolether, Formamid, N,N-Dimetylformamid, N-Methylformamid, Dimethylacetamid, N-Methylactemid und/oder N,N'-Dimethylharnstoff.

Besonders vorteilhaft sind auch Polyalkyleneoxide, Glyzerinmono-, di-, oder triacetat, Sorbitol, oder andere Zuckeralkohole wie Erythrit, Saccharide wie Glycose, Fructose oder Saccharose sowie Zitronensäure und seine Derivate.

Die Komponente E) der erfindungsgemäßen Mischung ist optional. Es kann sich um einen oder mehrere Stoffe handeln.

Zu üblichen Zuschlagstoffen oder Additiven gehören u.a. Füllstoffe, Gleitmittel, die von den unter D) genannten Weichmachern verschieden sind.
Flexibilisierungsmittel, Pigmentierungsmittel, Farbstoffe, Entformungsmittel und anderen.

Als Füllstoff geeignet sind beispielsweise synthetische Polymere, die nahezu in der Mischung löslich sind, wie etwa auf Milchsäure basierende Polymere wie ®Lacea der Mitsui, ®Resomer der Firma Boehringer Ingelheim sowie weitere Polymere auf der Basis von Milchsäure und artverwandte Polymere der Milchsäure der Firmen Wako Pure Chemical Industries Ltd., Medisorb So., Birmingham Polymers, Inc., Polysciences Inc., Purac Biochem BV, Ethicon, Cargill oder Chronopol, wobei einsichtig ist, daß diese Aufzählung nicht einer absoluten Vollständigkeit entsprechend kann, oder Blends von synthetischen Polymeren mit natürlichen Polymeren z.B. Mater-Bi der Fa. Novamont.

Weiter wird vorgeschlagen, mindestens einen anorganischen Füllstoff wie beispielsweise Magnesiumoxid, Aluminiumoxid, SiO₂, TiO₂ usw. zuzusetzen.

Zum Entfärben der Mischung eignen sich insbesondere organische oder anorganische Pigmente, besonders auch Perlglanzpigmente, die überwiegend auf Silikatstrukturen basieren, und daher biokompatibel sind, also als unbedenklich für lebende Organismen und prinzipiell als eßbar einzustufen sind und in Mengen zwischen 0,001 und 10 Gewichtsteilen eingesetzt werden können.

Zur Verbesserung der Fliesseigenschaften eignen sich insbesondere tierisch oder pflanzliche Fette und/oder Lecithine, die vorzugsweise in hydrogenierter Form verwendet werden können, wobei diese Fette uns sonstigen Fettsäurederiavte vorzugsweise einen Schmelzpunkt von größer 50°C aufweisen.

Die im Rahmen der Erfindung eingesetzte Dialdehydstärke wird durch Oxidation von Stärke erhalten. Dabei wird die C2-C3-Bindung in der Wiederholungseinheit, also dem Glycosebaustein, aufgespalten und zu je einer Aldehydgruppe oxidiert. Der Oxidationsgrad einer Dialdehydstärke beschreibt den prozentualen Anteil der auf diese Weise geöffneten Glucoseeinheiten zu der Gesamtzahl der vorliegenden Glucoseeinheiten, d.h. Oxidationsgrad (oxidierte Glukose-Wiederholungseinheiten in Stärke; Summe aller Glucoseeinheiten in Stärke, geöffnet und ungeöffnet) multipliziert mit 100.

Herstellungsmethoden werden u.a. im WO 95/12619 und in Starch Production Technology, J.A. Radley (Hrsg.), Appl. Sci. Barking (1976), S. 423 ff. beschrieben.

Es war besonders überraschend, daß gemäß der Erfindung Formkörper zugänglich sind, die nicht nur eine homogene Struktur aufweisen, sondern auch eine erhöhte Wasserbeständigkeit bei gleichzeitig guter Elastizität. Die Formkörper zeigen keine oder allenfalls eine geringfügige, untergeordnete Sprödigkeit. Die Zusammensetzungen lassen sich problemlos thermoplastisch z.B. durch Extrusion oder nach Methoden der Spritzgußtechnik verarbeiten. Sie sind physiologisch unbedenklich und können somit in unmittelbaren Kontakt mit Lebensmitteln treten.

Die erfindungsgemäße thermoplastische Formmasse läßt sich nach den bekannten Verarbeitungsverfahren zu Produkten verarbeiten. So kann sie z. B. in einem ersten Schritt granuliert oder pelletisiert werden.

Gegenstand der Erfindung ist somit auch ein Granulat, das durch Extrusion und Pelletisierung aus der thermoplastischen Mischung gemäß der Erfindung erhältlich ist. Außerdem können entweder direkt oder durch emeutes thermoplastisches Verarbeiten eines sich thermoplastisch verhaltenden Granulats biologisch gut abbaubare Formteile oder Folien mit verbesserten mechanischen Eigenschaften erhalten werden. Schließlich gehört zur Erfindung insbesondere auch die Verwendung der thermoplastischen Mischungen zur Herstellung von Formteilen oder Folien.

Insgesamt decken die erfindungsgemäßen Produkte damit eine Vielzahl von Anwendungsmöglichkeiten ab. Hierzu gehören im einzelnen unter anderem Klebstoffadhäsive für Papier und Wellpappe, Formkörper, die durch Spritzguß hergestellt werden, vor allem Stäbe, Rohre, Flaschen, Kapseln, Granulate, Lebensmittelzusatzstoffe, Filme, als Überzüge oder freistehende Filme, auch als Laminate, vor allem Folien, Verpackungsmaterialien, Beutel, Retardmaterialien zur kontrollierten Freisetzung von Wirkstoffen im allgemeinen, insbesondere Pharmaka, Pestizide oder andere in der Agrikultur eingesetzte Wirkstoffe, Dünger, Aromastoffe etc. Dabei kann die Freigabe der aktiven Substanz aus Filmen, Folien, Preßlingen, Partikeln, Mikropartikeln, Stäbchen oder anderen Extrudaten oder sonstigen Formkörpem erfolgen.

Weitere bevorzugte Anwendungen umfassen Lebensmittelverpackungen, insbesondere Wurst- oder Käsehüllen, Absorber, Puder und dergleichen.

In einer besonderen Ausführungsform werden die thermoplastischen Mischungen gemäß der Erfindung zur Herstellung von Formkörpern zur kontrollierten Freigabe von Wirkstoffen, wie etwa Tabletten oder Dragées, verwendet.

Eine weitere zweckmäßige und besonders günstige Verwendung der thermoplastischen Mischung gemäß der Erfindung betrifft die Herstellung von Formkörpern, die sich zur Herstellung von massiven Formkörpern, Hohlkörpern oder Kombinationen davon eignen.

Noch eine herausragende Verwendung der erfindungsgemäßen thermoplastischen Mischung ist in der Herstellung von Folien zum Gebrauch in der Landwirtschaft angesiedelt.

In weiters besonderer Abwandlung sieht die Erfindung die Verwendung der thermoplastischen Mischung zur Herstellung von Folien zum Gebrauch in der Lebensmittelanwendung vor.

Noch eine spezielle erfindungsgemäße Verwendung der thermoplastischen Mischung liegt in der Herstellung von Folien zum Gebrauch als Lebensmittelumverpakkung.

Eine weiterhin ausgesprochen günstige Verwendung der thermoplastischen Mischung gemäß der Erfindung ergibt sich bei der Herstellung von Folien zum Gebrauch als Lebensmittelverpackung mit vollständigem Flächenkontakt zum Lebensmittel.

Schließlich ist auch eine Verwendung der thermoplastischen Mischung gemäß der Erfindung besonders vorteilhaft, bei der Flach- oder tubulare Folien zur Verwendung als Lebensmittelhüllen für Wurst und Käse hergestellt werden.

Außerdem bevorzugt ist im Rahmen der Erfindung die Verwendung der thermoplastischen als temporäre Schutzfilme für technische Gebrauchsgegenstände.

Die Erfindung wird durch folgende Beispiele näher erläutert.

### Beispiel 1

### Synthese von Dialdehydstärke

162g (1ml) einer Kartoffelstärke (Toffena der Fa. Südstärke) werden in 2I Wasser suspendiert und in ein 5l Reaktionsgefäß mit Rührer plaziert. 10,7g (0,05mol) Natriumperiodat (z.B. Aldrich) werden hinzuaddiert. Der Reaktionsansatz wird auf pH 3 bis 4 eingestellt. Die Lösung, die nach kurzer Zeit erhalten wir, wird für eine weitere Stunde bei Raumtemperatur gerührt. Die gebildete oxidierte Stärke wird durch Fällung in einem Wasser-Ethanolgemisch separiert, bei etwa 40°C im Vakuum getrocknet. Entsprechend des eingesetzten Oxidationsmittels und der zugrundeliegenden Reaktionsgleichung (1 CHOH-CHOH + 1 IO₄ = 1 CHO-CHO + 1 IO³ + 1 H₂O) wird ein Oxidationsgrad von 5% erhalten.

### Beispiel 2

### Synthese von Dialdehydstärke unter katalytischen Bedingungen

Im elektrochemischen Prozeß gemäß WO 97/12619 werden bei der Herstellung verschiedener Oxidationsgrade, d.h. verschiedene Dialdehydstärken, katalytische Mengen an Periodat eingesetzt. Eine entsprechende Apparatur und die Vorgehensweise ist in WO 95/12619; ausführlicher beschrieben. Es werden Oxidationsgrade in Abhängigkeit von der Reaktionsdauer mit Werten zwischen 30 und 85% eingestellt.

### Beispiel 3

### Herstellung eines thermoplastischen verarbeitbaren Blendgemisches aus einer Stärke und einer Dialdehydstärke mittels eines Knetaggregats

Die Verbindungen werden in einem handelsüblichen Knetaggregat hergestellt (Brabender Kneter). Das Knetaggregat wird auf 100°C geheizt. 30g Kartoffelstärke (Toffena der Fa. Südstärke) und 3g Dialdehydstärke (ca. 90% Oxidationsgrad, Fa. Aldrich) werden im Betriebszustand des Knetagregats zugegeben. Anschließend werden 15g Wasser zugegeben und mit dem vorgelegten Polymer homogenisiert. Nach ca. 3 Minuten werden 9g Glyzerin hinzuaddiert. Nach weiteren 3 Minuten werden 0,3g Glyoxal (40%ige Lösung) in einem Guß dazugegeben. Nach weiteren 2 Minuten wird der Versuch beendet. Die thermoplastische Masse wird sofort entnommen. Es handelt sich um ein homogenes Produkt. Die aus diesem Material hergestellten Filme nach einem Preßverfahren sind transparent, sehr homogen und zeichnen sich durch hohe Flexibilität aus.

### Beispiel 4

### Herstellung eines thermoplastisch verarbeitbaren Blendgemisches aus einer Stärke und einer Dialdehydstärke mittels eines Knetaggregats.

Der Versuch erfolgt wie in Beispiel 4 beschrieben. Das Knetaggregat wird auf 100°C geheizt. 50g Maisstärke (Maize Starch der Fa. National Starch) und 2,5g Dialdehydstärke (ca. 90% Oxidationsgrad, Fa. Aldrich) werden im Betriebszustand des Knetaggregats zugegeben. Es werden 25g Wasser zugegeben und mit dem vorgelegten Polymer homogenisiert. Nach ca. 3 Minuten werden 15g Glyzerin hinzuaddiert. Nach weiteren 3 Minuten werden 0,5g Glyoxal (40%ige Lösung) in einem Guß dazugegeben. Nach weiteren 2 Minuten wird der Versuch beendet. Die thermoplastische Masse wird sofort entnommen. Das Produkt ist weiß und hart. Die aus diesem Material hergestellten Filme nach einem Preßverfahren sind homogen, flexibel und transparent bis opak.

### Beispiel 5

### Herstellung eines thermoplastisch verarbeitbaren Blendgemisches aus einer Stärke und einer Dialdehydstärke mittels eines Knetaggregats.

Der Versuch erfolgt wie in Beispiel 4 beschrieben. Das Knetaggregat wird auf 100°C geheizt. 30g Kartoffelstärke (Toffena der Fa. Südstärke) und 6g Dialdehydstärke (ca. 70% Oxidationsgrad) werden im Betriebszustand des Knetaggregats zugegeben. Es werden 15g Wasser zugegeben und mit dem vorgelegten Polymer homogenisiert. Nach ca. 3 Minuten werden 12g Glyzerin hinzuaddiert. Nach weiteren 2 Minuten wird der Versuch beendet. Die thermoplastische Masse wird sofort entnommen. Es handelt sich um ein flexibles, transparentes Produkt. Die aus diesem Material hergestellten Filme nach einem Preßverfahren zeichnen sich durch Flexibilität, eine hohe Homogenität und Transparenz aus.

### Beispiel 6

### Herstellung eines thermoplastisch verarbeitbaren Blendgemisches aus einer Stärke und einer Dialdehydstärke mittels eines Knetaggregats.

Der Versuch erfolgt wie in Beispiel 4 beschrieben. Das Knetaggregat wird auf 100°C geheizt. 30g einer kationischen Stärke (Cato 245 der Fa. National Starch) und 3g Dialdehydstärke (ca. 90% Oxidationsgrad Fa. Aldrich) werden im Betriebszustand des Knetaggregats zugegeben. Es werden 15g Wasser zugegeben und mit dem vorgelegten Polymer homogenisiert. Nach ca. 5 Minuten werden 9g Glyzerin hinzuaddiert. Nach weiteren 5 Minuten wird der Versuch beendet. Die thermoplastische Masse wird sofort entnommen. Das Produkt ist weiß und homogen. Die aus diesem Material hergestellten Filme nach einem Preßverfahren sind transparent, leicht gelblich, homogen, flexibel und wirken leicht adhesive. Die Filmdicke liegt im Bereich von 120mm +/- 20mm.

### Beispiel 7

### Beschreibung der Herstellung der Folien mittels Preßtechnik aus thermoplastischen Materialien basierend auf Stärke.

Die thermoplastischen Formmassen werden zu Folien mittels der hier beschriebenen Preßtechnik weiterverarbeitet. Hierzu wird eine handelsübliche Presse der Fa. Schwabenthan (Polystat 300 S) verwendet. Die Presse wird auf 100°C vorgeheizt. Die Probenpräparation erfolgt in einer "Sandwich-Technik" zwischen zwei gewebeverstärkten Teflonfolien, die mit einem etwa 100mm dicken metallischen Rahmen auf Abstand gehalten werden. Etwa 2g der im Kneter hergestellten Masse werden bei der Präparation in Mitte der unteren Folie plaziert. Die Probe wird 5 Minuten bei 100°C und einem Druck von 1t temperiert. Anschließend wird die Probe bei 100°C für 5 Minuten und einem Druck von 10t gepreßt. Dies entspricht einem Druck von 200 bar. Die Presse wird entlastet und die Probe wird an eine andere Presse zwecks Abkühlung überführt. Hierbei handelt es sich um eine wassergekühlte Presse der Fa. Robert Fuchs Hydraulische Maschinen und Werkzeuge. Während des Abkühlvorgangs über eine Zeit von 2 Minuten wird ein Druck von 50 bar angelegt.

### Beispiels 8

### Methode zur Bestimmung der Wasserbeständigkeit von Folien aus Biopolymeren und deren Mischungen.

Für die Untersuchung der Wasseraufnahme und des Quellverhaltens werden aus der zu untersuchenden Folie 1cm x 1cm große Flächen herausgeschnitten. Um die Vergleichbarkeit mit anderen Proben zu gewährleisten, ist darauf zu achten, daß besonders homogene Bereiche für die Untersuchung verwendet werden. Die beiden Folienstücke werden einmal bei Raumtemperatur (Wasserbad, 20°C, 4h) und einmal bei erhöhter Temperatur (Wasserbad, 80°C, 2h) untersucht. Es ergibt sich somit folgendes Szenario:
A) Folie 1: Wasserbad 20°C 4h
B) Folie 2: Wasserbad 80°C 2h.

Die Folienstücke werden anschließend auf einer abgestuften Skala von 0 bis 5 bewertet, wobei "0" der vollständigen Auflösung der Folie entspricht und "5" den Zustand bewertet, bei dem keine äußeren Einflüsse mit dem bloßen Auge zu erkennen sind.

**Tabelle I:**

| Vollständiges Bewertungsschema zur Beurteilung der Wasserbeständigkeit von Folien aus thermoplastischen Formmassen Dialdehydstärke enthaltend | |
|---|---|
| **Bewertungszahl** | **Beschreibung** |
| 0 | vollständige Auflösung der Folie |
| 1 | Folie ist in kleine Flocken/Bröckchen zerfallen |
| 2 | gequollen, weich, milchig |
| 3 | weich, milchig |
| 4 | mit bloßen Auge gerade auszumachende Veränderung, |
| 5 | nicht gequollen, nicht milchig keine äußeren Einflüsse mit dem bloßen Auge erkennbar. |

**Tabelle II:**

| Zusammenfassung und Beurteilung der Folien aus thermoplastischen Formmassen Dialdehydstärke enthaltend | | | | | | | |
|---|---|---|---|---|---|---|---|
| **Stärke** | **Dialdehydstärke** **(%)** | **Wasser** **(%)** | **Glyzerin** **(%)** | **Glyoxal** **(%)** | **Zustand der Folie** | **A*** | **B*** |
| Kartoffel | 10 | 50 | 50 | 0 | weich; elastisch; durchscheinend | 5 | 2 |
| Kartoffel | 10 | 50 | 50 | 10 | weich; elastisch; transparent; leicht klebrig | 4 | 1-2 |
| Kartoffel | 30 | 50 | 50 | 0 | weich; flexibel; rissig; stabil | 5 | 1 |
| Kartoffel | 30 | 50 | 50 | 10 | weich; flexibel | 5 | 1-2 |
| Mais | 10 | 30 | 15 | 0 | braun; rissig; klebt zunächst an PTFE-Folie | 5 | 2-3 |
| Mais | 30 | 30 | 15 | 0 | weich; flexibel; stabil; braun | 5 | 3 |
| Mais | 30 | 30 | 15 | 10 | weich; flexibel; stabil; braun | 5 | 3 |

Als Kartoffelstärke wurde die Marke Toffena der Fa. Südstärke eingesetzt.
Als Maisstärke wurde die Marke Maize Starch der Fa. National Starch eingesetzt.
Die Angabe von Glyoxal bezieht sich auf die Gewichtsprozentangabe einer 40%igen wäßrigen Lösung.
A* Beurteilung der Wasserbeständigkeit nach 4h Raumtemperatur
B* Beurteilung der Wasserbeständigkeit nach 2h bei 80°C

### Beispiel 9 (Vergleichsbeispiele)

Die thermoplastischen Formmassen ohne Dialdehydstärke wurden gemäß des Beispiels 3 und folgende, sowie die daraus geformten Folien entsprechend der Beschreibung unter Beispiel 7, hergestellt

**Tabelle III:**

| Zusammenfassung und Beurteilung der Folien aus thermoplastischen Formmassen ohne Dialdehydstärke | | | | | | |
|---|---|---|---|---|---|---|
| **Stärke** | **Dialdehydstärke** **(%)** | **Wasser** **(%)** | **Glyzerin** **(%)** | **Glyoxal*** **(%)** | **A*** | **B*** |
| Kartoffel | 0 | 50 | 50 | 0 | 2 | 1 |
| Kartoffel | 0 | 50 | 50 | 10 | 2-3 | 1 |
| Mais | 0 | 50 | 15 | 0 | 0-1 | 0-1 |
| Mais | 0 | 30 | 15 | 10 | 1 | 0-1 |

Als Kartoffelstärke wurde die Marke Toffena der Fa. Südstärke eingesetzt.
Als Maisstärke wurde die Marke Maize Starch der Fa. National Starch eingesetzt.
Die Angabe von Glyoxal bezieht sich auf die Gewichtsprozentangabe einer 40%igen wäßrigen Lösung.

### Beispiel 10

Herstellung einer thermoplastischen Stärkeblends aus Kartoffelstärke und Dialdehydstärke.
Zu 1kg Kartoffelstärke (Kartoffelmehl z.B. der Marke Toffena™ der Firma Südstärke) und 100g Dialdehydstärke (Fa. Aldrich, Oxidationsgrad ca. 90%) wird ein Gemisch aus 300g Glyzerin und 1g Glyoxal (40%ige Lösung) gegeben. Das Gemisch wird manuell unter Beachtung der Sicherheitsvorschriften gemischt. Die auf diese Weise hergestellte Mischung kann direkt zur weiteren Verarbeitung an einem Extruder verwendet werden.

Der Versuch wird in einem Zweischneckenextruder durchgeführt (Haake Rheomex PTW 25/28p). Bei den verwendeten Schnecken handelt es sich um die Standardausführung der konischen Variante. Der Extruder ist mit vier variabel ansteuerbaren Heizelementen versehen. Die Soll-Verarbeitungstemperatur beträgt in allen vier Zonen 140°C. Die Temperaturverläufe werden on-line aufgezeichnet. Nach etwa 10 bis 20 Minuten sind die lst-Verarbeitungstemperaturen in allen vier Zonen bei 120°C +/-5°C. Die Massetemperatur an der Düse ist im Durchschnitt zehn Grad Celsius über der Temperatur der Heizelement. Die Drehzahl beträgt 25 Umdrehungen pro Minute. Der Austritt des Extruders erfolgt durch eine sog. Breitschlitzdüse mit den Abmessungen 100mm Breite und 0,2mm Höhe (Höhenverstellbarkeit zwischen 0,2mm und 1,0mm).

Der Extruder wird stark überfüttert gefahren, d.h. am Einzug wird Substanz in ausreichender Menge zur Verfügung gestellt. Darüber hinaus wird mittels eines Stempels die permanente Zufuhr gewährleistet, so daß der Stofftransport möglichst gleichmäßig erfolgt. Der Stempel besteht aus hochleistungsfähigem Kunststoff (wahlweise Holz), um den Metallabrieb eines entsprechenden Werkzeuges auszuschließen.

Nach einer Vorlaufzeit von 10 Minuten tritt das Extruder zunächst milchig trüb aus der Düse aus. Anfangs ist der extrudierte Film sehr flexibel. Nach kurzer Zeit erstarrt der Film an der Luft. Er wird durch ein nachgeschaltetes Transportband weiterbefördert. Es kann bei dem Vorhandensein von Fehlstellen zum Abbrechen des extrudierten Bands kommen. Der extrudierte Film ist im warmen Zustand dehnbar, jedoch nimmt diese Eigenschaft mit dem Abkühlvorgang zusehends ab.

## Patentansprüche

1. Thermoplastische Mischung auf Stärkebasis zur Herstellung von biologisch abbaubaren Formkörpern mit verbesserten mechanischen Eigenschaften, erhältlich durch Bereitstellen und Mischen von
A) 100 Gew.-Teilen einer rechnerisch auf einen Wassergehalt von Null Prozent korrigierten beliebigen nativen, und / oder chemisch modifizierten, fermentativen, rekombinanten und/oder durch Biotransformation hergestellten Stärke und/oder von Derivaten der genannten Stärken;
wobei Komponente A) keine Dialdehydstärke gemäß Komponte B) ist ,
B) 1 - 100 Gew.-Teilen Dialdehydstärke, die einen Oxidationsgrad von mehr als 30% aufweist und keine Jod-Stärke-Reaktion (Blaufärbung) zeigt;
C) Wasser in einer Menge von 1 Gew.-Teile bis 100 Gew.-Teil;
D) mindestens einem Weichmacher in einer Menge im Bereich von 2 Gew.-Teilen bis zur Hälfte der Summe der Gewichtsteile A) und B);
E) ggf. weitere Biopolymere
F) ggf. bis zu (A) und (B)) Gewichtsteile weiterer üblicher Zusätze;
wobei das Mischen der Komponenten A bis F unter Einbringung von thermischer und mechanischer Energie in die thermoplastische Mischung erfolgt.

2. Mischung nach Anspruch 1, **dadurch gekennzeichnet, daß** sie als weiteres Biopolymer Proteine enthält.

3. Mischung nach Anspruch 1 oder 2, **dadurch gekennzeichnet, daß** sie als Weichmacher von Aldosen und/oder Ketosen abgeleitete Polyhydroxycarbonsäuren bzw. deren Lactone enthält.

4. Mischung nach Anspruch 3, **dadurch gekennzeichnet, daß** sie als Weichmacher Gluconsäure bzw. Gluconsäurelacton enthalten.

5. Mischung nach mindestens einem der Ansprüche 1 bis 4, **dadurch gekennzeichnet, daß** die Dialdehydstärke einen Oxidationsgrad von 70 bis 95% aufweist.

6. Mischung nach mindestens einem der Ansprüche 1 bis 5, **dadurch gekennzeichnet, daß** der Anteil an Dialdehydstärke 60 bis 95 bzw. 65 bis 85 Gewichtsteile.

7. Mischung nach mindestens einem der Ansprüche 1 bis 6, **dadurch gekennzeichnet, daß** sie destrukturierte Stärke enthält.

8. Mischung nach mindestens einem der Ansprüche 1 bis 6, **dadurch gekennzeichnet, daß** sie hydrolytisch abgebaute Stärke enthält.

9. Mischung nach mindestens einem der Ansprüche 1 bis 6, **dadurch gekennzeichnet, daß** sie chemisch modifizierte Stärke enthält.

10. Mischung nach mindestens einem der Ansprüche 1 bis 6 und 9, **dadurch gekennzeichnet, daß** sie kationisch oder anionisch modifizierte Stärke enthält.

11. Verfahren zur Herstellung von Zusammensetzungen nach einem oder mehreren der Ansprüche 1 bis 10, **dadurch gekennzeichnet,**
**daß** man Dialdehydstärke, Stärke und/oder modifizierte Stärke sowie ggf. weitere Biopolymere, Wasser und einen oder mehrere Weichmacher sowie ggf. weitere Zusatzstoffe vermengt, in thermoplastischen Zustand homogenisiert und ggf. einen Teil des Wassers entfernt.

12. Verfahren nach Anspruch 10, **dadurch gekennzeichnet, daß** man das Homogenisieren in einem Extruder vornimmt.

13. Verfahren nach Anspruch 10 oder 11, **dadurch gekennzeichnet, daß** man das Homogenisieren in der Schmelze vornimmt.

14. Verwendung der Zusammensetzungen nach mindestens einem der Ansprüche 1 bis 14 zur Herstellung von Formkörpern.

15. Verwendung nach Anspruch 14 zur Herstellung von Verpackungen für Lebensmittel oder Pharmazeutika.

16. Verwendung nach Anspruch 10 zur Herstellung von Wursthäuten.

17. Verwendung nach Anspruch 14 zur Herstellung von Formkörpem zur kontrollierten Abgabe von Wirkstoffen.

18. Verwendung nach Anspruch 14 zur Herstellung temporärer Überzüge für technische Gegenstände.

## Claims

1. A thermoplastic blend based on starch, for producing biologically degradable moulded bodies having improved mechanical properties, obtained by preparing and blending the following:
A) 100 parts by weight of any naturally occurring and/or chemically modified fermentative recombinant starch, arithmetically corrected to a water percentage of zero percent, or a starch produced by biotransformation and/or derivatives of said starches;
whereby component A) is not a dialdehyde starch according to component B),
B) 1-100 parts by weight of dialdehyde starch which has a degree of oxidation of more than 30% and manifests no starch-iodine reaction (blue coloration);
C) water in an amount of 1 parts per weight to 100 parts by weight;
D) at least one plasticizer in an amount in the region of 2 parts by weight to half of the total parts by weight A) and B);
E) more biopolymers, as required,
F) up to A) and B) parts by weight of more standard additives, whereby the blending of the components A) through F) is effected while introducing thermal and mechanical energy into the thermoplastic mixture.

2. A blend according to claim 1, **characterised in that** it contains proteins as additional biopolymer.

3. A blend according to claim 1 or 2, **characterised in that** as plasticizer it contains polyhydroxycarboxylic acid or its lactones, derived from aldose and/or ketose.

4. A blend according to claim , **characterised in that** it contains as plasticizer gluconic acid or gluconic acid lactone.

5. A blend according to at least one of claims 1 through 4, **characterised in that** the dialdehyde starch has a degree of oxidation of 70-90%.

6. A blend according to at least one of claims 1 through 5, **characterised in that** the proportion of dialdehyde starch is 60-95 or 65-85 parts by weight.

7. A blend according to at least one of claims 1 through 6, **characterised in that** it contains destructurised starch.

8. A blend according to at least one of claims 1 through 6, **characterised in that** it contains hydrolytically degraded starch.

9. A blend according to at least one of claims 1 through 6, **characterised in that** it contains chemically modified starch.

10. A blend according to at least one of claims 1 through 6, **characterised in that** it contains cationically or anionically modified starch.

11. A process for producing compositions according to one or more of claims 1 through 10, **characterised in that** dialdehyde starch, starch, and/or modified starch, and possibly also other biopolymers, water and one or more plasiticizers and possibly also other additives are blended, homogenised in the thermoplastic state and possibly with some of the water removed.

12. A process according to claim 10, **characterised in that** the homogenisation is effected in an extruder.

13. A process according to claim 10 or 11, **characterised in that** the homogenisation is effected in the melt.

14. A use of the compositions according to at least one of the claims 1 through 14, for producing moulded bodies.

15. A use according to claim 14, for producing packaging materials for foodstuffs or pharmaceutical products.

16. A use according to claim 10, for producing sausage skins.

17. A use according to claim 14, for producing moulded bodies for metered feeding of effective substances.

18. A use according to claim 14, for producing temporary coatings for technical objects.

## Revendications

1. Mélange thermoplastique à base d'amidon pour la préparation de corps moulés biologiquement dégradables avec des propriétés mécaniques améliorées, qu'on peut obtenir par préparation et mélange de
A) 100 parties en poids d'un amidon natif quelconque, et/ou modifié chimiquement, préparé par fermentation, recombinant et/ou préparé par biotransformation corrigé par calcul à une teneur en eau de zéro pour cent et/ou de dérivés des amidons cités ;
dans lequel le composant A) n'est pas un amidon dialdéhydique conforme au composant B),
B) 1-100 parties en poids d'amidon dialdéhydique, qui présente un degré d'oxydation de plus de 30 % et pas de réaction iode-amidon (coloration bleue) ;
C) de l'eau en une quantité de 1 partie en poids jusqu'à 100 parties en poids ;
D) au moins un plastifiant en une quantité dans la gamme de 2 parties en poids jusqu'à la moitié de la somme des parties en poids de A) et B) ;
E) éventuellement d'autres biopolymères ;
F) éventuellement jusqu'aux parties en poids de A) et B) d'autres additifs usuels ;
dans lequel le mélange des composés A à F est réalisé en introduisant de l'énergie thermique et mécanique dans le mélange thermoplastique.

2. Mélange selon la revendication 1, **caractérisé en ce qu'**il contient comme autre biopolymère des protéines.

3. Mélange selon la revendication 1 ou 2, **caractérisé en ce qu'**il contient comme plastifiant des acides polyhydroxycarboxyliques dérivés d'aldoses et/ou de cétoses où leurs lactones.

4. Mélange selon la revendication 3, **caractérisé en ce qu'**il contient comme plastifiant l'acide gluconique ou la lactone de l'acide gluconique.

5. Mélange selon au moins une des revendications 1 à 4, **caractérisé en ce que** l'amidon dialdéhydique présente un degré d'oxydation de 70 à 95 %.

6. Mélange selon au moins une des revendications 1 à 5, **caractérisé en ce que** la proportion d'amidon dialdéhydique est de 60 à 95 ou de 65 à 85 parties en poids.

7. Mélange selon au moins une des revendications 1 à 6, **caractérisé en ce qu'**il contient de l'amidon déstructuré.

8. Mélange selon au moins une des revendications 1 à 6, **caractérisé en ce qu'**il contient de l'amidon décomposé par hydrolyse.

9. Mélange selon au moins une des revendications 1 à 6, **caractérisé en ce qu'**il contient de l'amidon modifié chimiquement.

10. Mélange selon au moins une des revendications 1 à 6 et 9, **caractérisé en ce qu'**il contient de l'amidon modifié cationiquement ou anioniquement.

11. Procédé pour la préparation de compositions selon une ou plusieurs des revendications 1 à 10, **caractérisé en ce qu'**on
mélange de l'amidon dialdéhydique, de l'amidon et/ou de l'amidon modifié ainsi qu'éventuellement d'autres biopolymères, de l'eau et un ou plusieurs plastifiants ainsi qu'éventuellement d'autres additifs, qu'on homogénéisé à l'état thermoplastique et qu'on élimine éventuellement une partie de l'eau.

12. Procédé selon la revendication 10, **caractérisé en ce qu'**on réalise l'homogénéisation dans une extrudeuse.

13. Procédé selon la revendication 10 ou 11, **caractérisé en ce qu'**on réalise l'homogénéisation à l'état fondu.

14. Utilisation des compositions selon au moins une des revendications 1 à 14 pour la préparation de corps moulés.

15. Utilisation selon la revendication 14 pour la préparation d'emballages pour des aliments ou des médicaments.

16. Utilisation selon la revendication 10 pour la préparation de peaux de saucisses.

17. Utilisation selon la revendication 14 pour la préparation de corps moulés pour la distribution contrôlée de principes actifs

18. Utilisation selon la revendication 14 pour la préparation de revêtements temporaires pour des objets techniques.
